# EUROPEAN PATENT SPECIFICATION

(11) **EP 1 265 388 B1**
(45) Date of publication and mention of the grant of the patent: **30.05.2007**
(21) Application number: 01902696.2
(22) Date of filing: 31.01.2001
(51) Int. Cl.: H04J 3/12, H04B 3/23, H04M 3/00

(54) **MULTIPLEX TRANSMISSION DEVICE**
VORRICHTUNG ZUR MULTIPLEX-ÜBERTRAGUNG
DISPOSITIF DE TRANSMISSION MULTIPLEX

(43) Date of publication of application: 11.12.2002
(73) Proprietor: MITSUBISHI DENKI KABUSHIKI KAISHA, Chiyoda-ku Tokyo 100-8310 (JP)
(72) Inventor: HORIE, Nobuyoshi, Mitsubishi Denki K.K., Tokyo 100-8310 (JP)
(74) Representative: Popp, Eugen
(86) International application number: PCT/JP2001/000655
(87) International publication number: WO 2002/061992

(56) References cited:
- JP-A- 6 311 073
- JP-A- 9 261 444
- US-A- 5 029 204
- US-A- 5 533 121
- US-A- 5 982 783

## Description

### TECHNICAL FIELD

The present invention relates to multiplex transmission equipment for transmitting a speech signal, a facsimile signal, a voice band data signal, and similar signals in compressed and multiplexed form.

### BACKGROUND ART

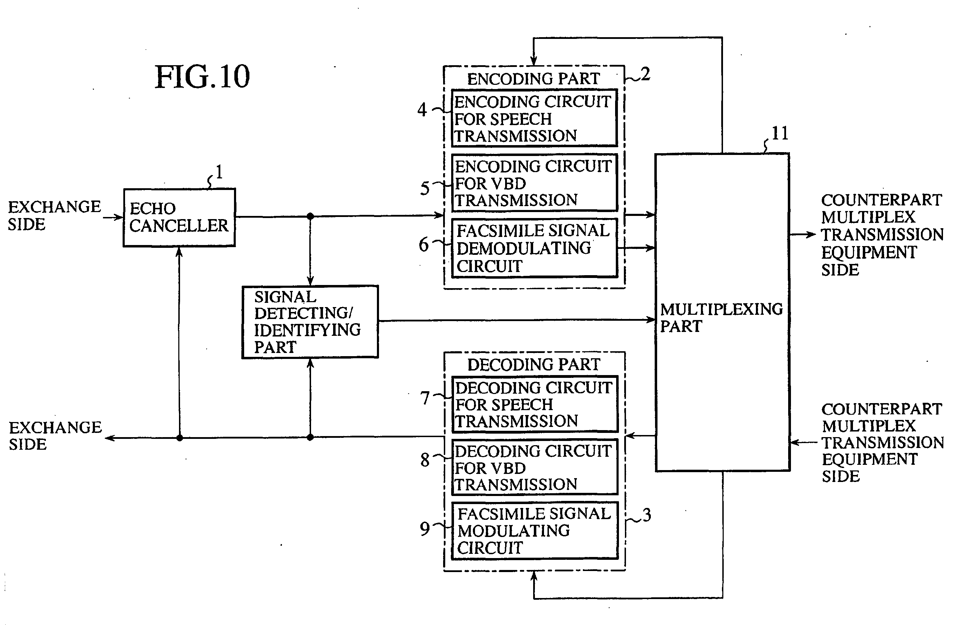

Fig. 10 depicts the configuration of DCME (Digital Circuit Multiplication Equipment) that is an example of conventional multiplex transmission equipment. In fig. 10, reference- numeral 1 denotes an echo canceller for canceling an echo produced on the part of an exchange; 2 denotes an encoding part for encoding a transmission signal input from the exchange side; and 3 denotes a decoding part for decoding a signal transmitted from a counterpart multiplex transmission equipment. In the encoding part 2, reference numeral 4 denotes a speech-transmission encoding circuit for encoding a speech signal; 5 denotes a VBD-transmission encoding circuit for encoding a voice band data signal (where VBD is an abbreviation of Voice Band Data); and 6 denotes a facsimile signal demodulating circuit for demodulating a facsimile signal. In the decoding part 3, reference numeral 7 denotes a speech-transmission decoding circuit for decoding an encoded speech signal; 8 denotes a VBD-transmission decoding circuit for decoding an encoded voice band data signal; and 9 denotes a facsimile signal modulating circuit for re-modulating a demodulated facsimile signal. Reference numeral 10 denotes a signal detecting/identifying part that detects whether the signal input thereto is voiced or unvoiced and, based on the result of detection, decides whether the input signal is a speech, facsimile or voice band data signal. Reference numeral 11 denotes a multiplexing part that multiplexes the encoded speech signal, the encoded voice band data signal and the demodulated facsimile signal from the encoding part 2, transmits them to the counterpart multiplex transmission equipment, and demultiplexes a signal therefrom into a speech signal a voice band data signal and a facsimile signal.

Next, a description will be given of transmission processing by the conventional multiplex transmission equipment. A speech, facsimile, or voice band data signal from the exchange side is input to the echo canceller 1. The echo canceller 1 cancels an echo produced in the input signal on the part of the exchange, and outputs the echo-cancelled-signal to the encoding part 2 and the signal detecting/identifying part 10. The signal detecting/identifying part 10 detects whether the speech, facsimile or voice band data signal input from the echo canceller 1 is voiced or unvoiced, and decide whether the input signal is a speech, facsimile or voice band data signal, and then outputs the result of decision and the result of voiced/unvoiced detection to the multiplexing part 11. Based on the results of decision and the result of voiced/unvoiced detection, the multiplexing part 11 outputs encoding/demodulating circuit select information to the encoding part 2. Based on the select information from the multiplexing part 11, the encoding part 2 selects the speech-transmission encoding circuit 4, VBD-transmission encoding part 5, or facsimile-transmission demodulating circuit 6, and encodes or demodulates the transmission signal input from the echo canceller 1, thereafter outputting the encoded or demodulated signal to the multiplexing part 11.

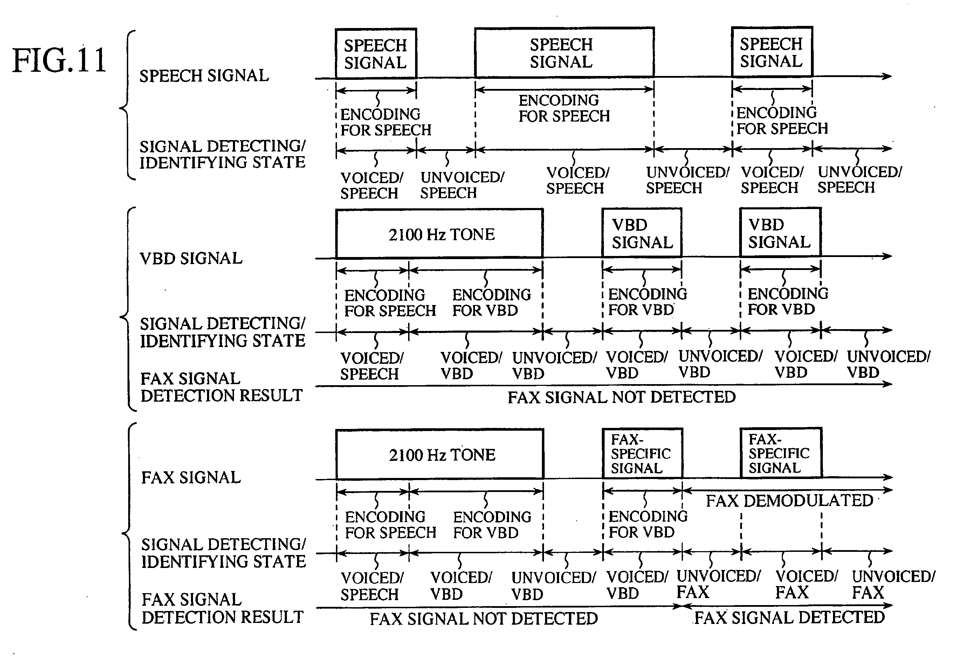

Referring now to Fig. 11, a description will be given of the signal detection and signal identification method in the signal detecting/identifying part 10. The signal detecting/identifying part 10 identifies the kind of the input signal, depending on whether the signal contains a 2100-Hz tone signal. That is, when detecting the 2100-Hz tone signal, it identifies the input signal as a facsimile signal or voice band data signal, whereas when detecting no 2100-Hz tone signal, it identifies the input signal as a speech signal.

Accordingly, when a speech signal is input from the exchange side, the signal detecting/identifying part 10 detects the transition from the unvoiced to the voiced state, and since no 2100-Hz tone signal arrives, it identifies the input signal as the speech signal. The result of detection that the input signal is voiced and the result of identification that the input signal is the speech signal are output to the multiplexing part 11. Based on the result of identification, the multiplexing part 11 outputs to the encoding part 2 a select signal to select the speech-transmission encoding circuit 4. The encoding part 2 selects the speech-transmission encoding circuit 4 and, during the voiced state, encodes the input signal and outputs it to the multiplexing part 11.

On the other hand, when a voice band data signal or facsimile signal is input to the signal detecting/identifying part 10, it detects a change from an unvoiced to a voiced state, and detects the 2100-Hz tone signal arriving thereat, and consequently, it identifies the input signal as the voice band data signal or facsimile signal. The signal detecting/identifying part 10 outputs to the multiplexing part 10 the result of detection that the input signal is voiced and the result of identification that the input signal is the voice band data signal or facsimile signal. Since at this point in time the multiplexing part 11 is incapable of deciding whether the input signal from the exchange side is a voice band data signal or facsimile signal, it outputs to the encoding part 2 a select signal for selecting the VBD-transmission encoding circuit 5 and the facsimile signal demodulating circuit 6 based on the result of identification by the signal detecting/identifying part 10, and at the same time, outputs to the encoding part 2 a signal indicating whether the input signal is voiced or unvoiced. Based on the select signal, the encoding part 2 performs encoding of the signal by the VBD-transmission encoding circuit 5 and demodulation of the signal by the facsimile signal demodulating circuit 6 when the input signal from the exchange side is voiced. When the input signal from the exchange side is a facsimile signal, a facsimile-specific signal is input after the 2100-Hz tone signal as the result of the signal demodulation by the facsimile signal demodulating circuit 6; upon detection of the specific signal, the facsimile signal demodulating circuit 6 outputs to the multiplexing part 11 the result of detection that the input signal is a facsimile signal. Upon receiving from the facsimile signal demodulating circuit 6 the result of detection that the input signal is a facsimile signal, the multiplexing part 11 selects the output of the facsimile signal demodulating circuit 6 and, otherwise, selects the output of the VBD-transmission encoding circuit.

Incidentally, an appreciably large amount of time is required to detect the 2100-Hz tone signal in the signal detecting/identifying part 10. During this detection the speech-transmission encoding circuit 4 is selected for encoding in the encoding part 2, by which the leading portion of the 2100-Hz tone signal is encoded for speech transmission. In the case of a facsimile signal being input from the exchange side, the VBD-transmission encoding circuit 5 is selected until a facsimile-specific signal is detected, by which the facsimile signal is encoded for VBD-transmission accordingly.

As described above, the speech signal and the voice band data signal are compressed by encoding in the encoding part 2, and only voiced signals are multiplexed. And, the facsimile signal is demodulated in the encoding part 2 and them multiplexed. Accordingly, the speech signal, the voice band data signal and the facsimile signal can be transmitted efficiently.

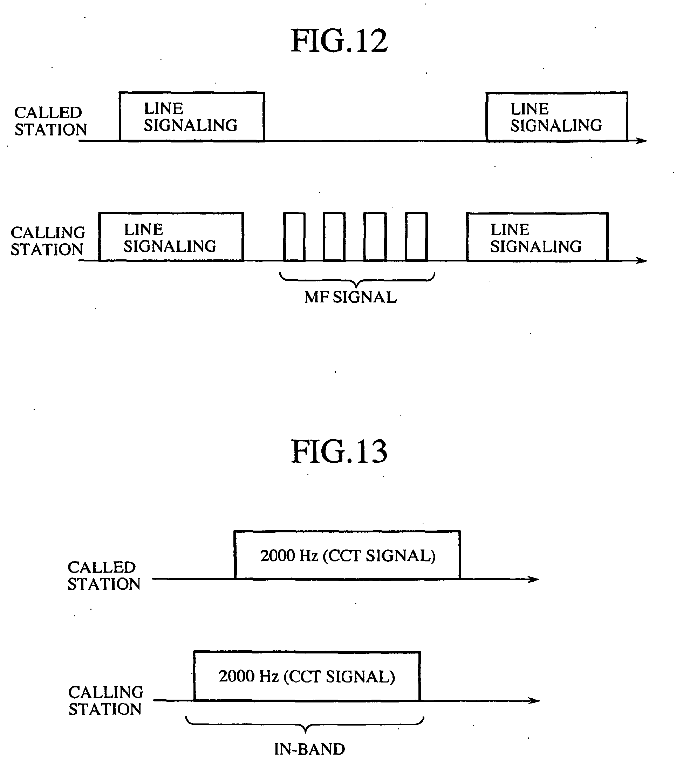

Next, consider that signals based on various signaling systems, such as shown in Figs. 12 and 13, are input to the conventional multiplex transmission equipment from exchanges.

Fig. 12 is a schematic diagram explanatory of a signal transmission scheme in signaling system Chinese No. 1 and signal transmission schemes in signaling systems No. 5, R1 and R2 that are international standard signal transmission systems. In these signaling systems, signals fall into two categories, i.e. Line signaling and Register Signaling. The line signaling shown in Fig. 12 includes, for example, a seizure signal for calling that is sent from a calling party exchange to a called party exchange, a proceed-to-send signal that is sent from the called party exchange in answer to the seizure signal, or a call signal that is sent from the calling party exchange to the called party exchange after sending a dial number, and an answer signal that is sent from the called party exchange in answer to the call signal. And, the register signaling includes, for example, a signal that carries a called party telephone number that is sent from the calling party exchange to the called party exchange.

In line signaling, the signaling systems Chinese No. 1 and R2 performs what is called Out-Band transmission using a time slot 16 over which speech, voice band data and facsimile signals are not transmitted. In contrast thereto, the signaling system R1 performs what is called In-Band transmission using the least significant one (i.e. Robbed Bit) of eight bits of the time slot for the transmission of speech, voice band data and facsimile signals are transmitted. And, the signaling system No. 5 transmits a 2400-Hz tone signal, or 2600-Hz tone signal, or a 2400-Hz tone/2600-Hz tone mixture signal using the time slot for the transmission of speech, voice band data and facsimile signals. This transmission is also the In-Band transmission. The signaling system No. 7 depicted in Fig. 13 performs the In-Band transmission for the first 2000-Hz tone signal (CCT signal: Conductivity Check Tone, a signal that either of exchanges generates to test the continuity in the circuit) and the Out-Band transmission for the subsequent signaling signals.

As mentioned above, signals of the signaling systems are classified into those for the In-Band transmission and those for the Out-Band transmission; the signaling transmission of such signals by the conventional multiplex transmission equipment of Fig. 10 gives rise to such problems as described below.

Referring first to the signaling system No. 5, the 2400-Hz tone signal or 2600-Hz tone signal, or a 2400-Hz tone/2600-Hz tone mixture signal, which is a line-signaling signal, is transmitted from either of the originating and terminating exchanges. Accordingly, such a signal is cancelled by the echo canceller 1 in the multiplex transmission equipment. As a result, no normal signaling transmission can be achieved--this disables circuit connections between the exchanges, making subsequent communications impossible.

Further, since the CCT signal in the signaling system No. 7 is also sent from either of the originating and terminating exchanges as in the above, it is cancelled by the echo canceller 1 in the multiplex transmission equipment, and consequently, no conductivity check is made, disabling the subsequent connections for communications.

Moreover, a register-signaling signal (a signal for carrying the telephone number from the originating exchange to the terminating exchange) in each of the signaling systems No.5, R1, R2 and Chinese No. 1, is sent as an MF (Multi Frequency) signal, but in speech encoding means (for example, 8 kbit/s CS-ACELP speech encoding means based on ITU-T Recommendation G. 729) used for high-efficiency transmission of speech signals in recent years, such an MF signal cannot normally be transmitted in some cases. That is, these MF signals are decided as speech in the signal detecting/identifying part 10 and the speech-transmission encoding circuit 4 is selected, with the result that the telephone number contained in the register-signaling signal may sometimes be transmitted improperly.

As described above, the conventional multiplex transmission equipment is incapable of normal transmission of the CCT signal and the MF signal, and hence it cannot normally transmit the subsequent speech signal voice band data signal and facsimile signal. A conventional multiples transmission equipment with echo canceller disabling function is described in the US publication number 5 533 121.

### DISCLOSURE OF THE INVENTION

The present invention is intended to solve such problems as mentioned above, and has for its object to provide multiplex transmission equipment provided with signaling-transmission encoding means and decoding means that permit the detection of various signaling transmission systems, operation control of an echo canceller during signaling transmission and normal transmission of signaling signal such as a register-signaling MF signal.

To attain the above objective, the multiplex transmission equipment according to an aspect of the present invention comprises: an echo canceller for canceling an echo from counterpart multiplex transmission equipment, mixed in a transmission signal input from an exchange side; an encoding part for encoding a speech signal contained in said transmission signal output from the echo canceller and for demodulating a facsimile signal contained in said transmission signal; a multiplexing part for multiplexing the transmission signal encoded by the encoding part and for outputting the multiplexed signal to said counterpart multiplex transmission equipment; and a signaling code detecting circuit for detecting a line signaling signal based on a change in a code of a specific time slot of the input signal from said exchange side; wherein the echo cancellation by said echo canceller is suspended when the signaling signal is detected by said signaling code detecting circuit. With this arrangement, it is possible to transmit the signaling signal to counterpart multiplex transmission equipment in a specific time slot without canceling it by the echo canceller. Further, the multiplex transmission equipment may also have a construction in which the encoding part is provided with a signaling-transmission encoding circuit for encoding the signaling signal by which the transmission signal is encoded when the signaling signal is detected by the signaling code detecting circuit. This arrangement ensures encoded transmission of the signaling signal, and hence permits its normal transmission to the counterpart multiplex transmission equipment. Moreover, the multiplex transmission equipment may also have a construction in which when the signaling signal is detected by the signaling code detecting circuit, the echo cancellation is suspended for a predetermined period of time even after the signaling signal becomes unvoiced. This arrangement provides an adequate amount of time for the suspension of echo cancellation until the end of signaling, hence permitting normal transmission of the signaling signal to the counterpart multiplex transmission equipment.

Multiplex transmission equipment according to another aspect of the present invention is provided with: an echo canceller for canceling an echo from counterpart multiplex transmission equipment, mixed in a transmission signal input from an exchange side; an encoding part for encoding a speech signal contained in said transmission signal output from the echo canceller and for demodulating a facsimile signal contained in said transmission signal; a multiplexing part for multiplexing the transmission signal encoded by the encoding part and for outputting the multiplexed signal to said counterpart multiplex transmission equipment; and a tone signal detecting circuit for detecting a line signaling signal by detecting a specific tone signal in the input signal from said exchange side; wherein the echo cancellation by said echo canceller is suspended when the signaling signal is detected by said tone signal detecting circuit. With this arrangement, it is possible to detect the transmission of the signaling signal by detecting the tone signal transmitted by the signaling system and to transmit the signaling signal to counterpart multiplex transmission equipment without canceling it by the echo canceller. Further, the multiplex transmission equipment may also have a construction in which the encoding part is provided with a signaling-transmission encoding circuit for encoding the signaling signal and the transmission signal is encoded by the signaling-transmission encoding circuit when the signaling signal is detected by the tone signal detecting circuit. This arrangement ensures encoded transmission of the signaling signal, and hence permits its normal transmission to the counterpart multiplex transmission equipment. Moreover, the multiplex transmission equipment may also have a construction in which when the signaling signal is detected by the tone signal detecting circuit, the echo cancellation is suspended for a predetermined period of time even after the signaling signal becomes unvoiced. This arrangement provides an adequate amount of time for the suspension of echo cancellation until the end of signaling, hence permitting normal transmission of the signaling signal to the counterpart multiplex transmission equipment.

### BRIEF DESCRIPTION OF THE DRAWINGS

Fig. 1 is a block diagram illustrating the configuration of multiplex transmission equipment according to Embodiment 1 of the present invention.
Fig. 2 is a schematic diagram explanatory of a signaling overhang time in the multiplex transmission equipment according to the present invention.
Fig. 3 is a block diagram illustrating the configuration of multiplex transmission equipment according to Embodiment 2 of the present invention.
Fig. 4 is a flowchart showing the contents of processing for detecting the Chinese No. 1 signaling in multiplex transmission equipment according to Embodiment 3 of the present invention.
Fig. 5 is a flowchart showing the contents of processing for detecting the R2 signaling in the multiplex transmission equipment according to Embodiment 3 of the present invention.
Fig. 6 is a flowchart showing the contents of processing for detecting the R1 signaling in the multiplex transmission equipment according to Embodiment 3 of the present invention.
Fig. 7 is a flowchart showing the contents of processing for detecting the No. 5 signaling in multiplex transmission equipment according to Embodiment 4 of the present invention.
Fig. 8 is a flowchart showing the contents of processing for detecting the Nos. 6 and 7 signaling in the multiplex transmission equipment according to Embodiment 4 of the present invention.
Fig. 9 is a flowchart showing the contents of processing for detecting signals of various signaling systems, including processing for identifying speech and similar signals, in multiplex transmission equipment according to Embodiment 4 of the present invention.
Fig. 10 is a block diagram depicting an example of conventional multiplex transmission equipment.
Fig. 11 is a schematic diagram showing how to detect and identify transmission signals in the conventional transmission equipment.
Fig. 12 is a schematic diagram explanatory of signaling systems in various signal transmission systems.
Fig. 13 is a schematic diagram explanatory of signaling system No. 7.

### BEST MODES FOR CARRYING OUT THE INVENTION

### EMBODIMENT 1

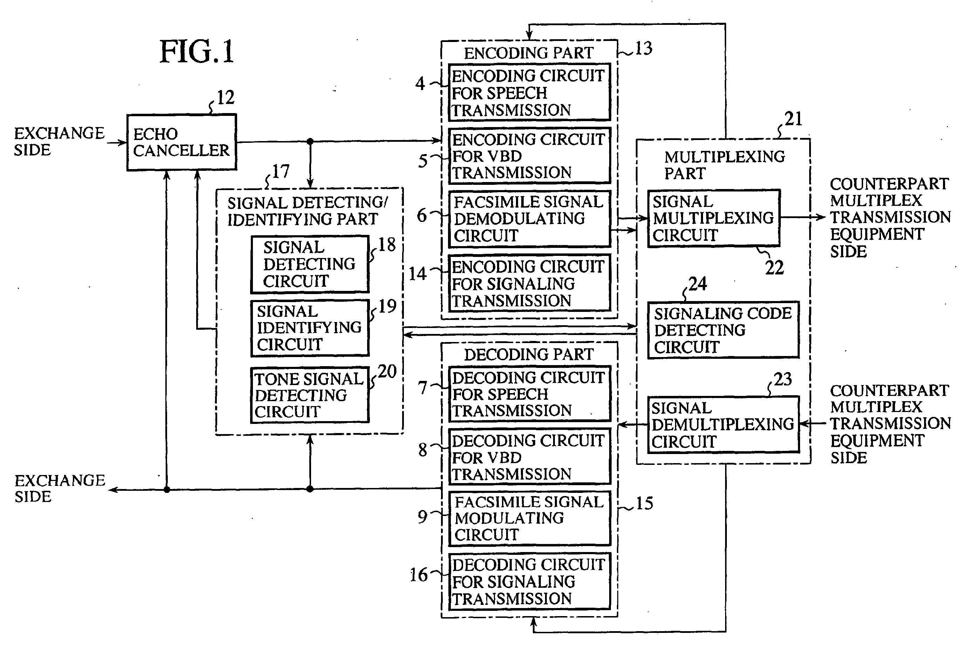

Fig. 1 is a block diagram illustrating the configuration of multiplex transmission equipment according to Embodiment 1 of the present invention. In Fig. 1, an input signal from the exchange side is a transmission signal that is a mixture of a telephone speech signal and a voice band data signal or a facsimile signal from a facsimile terminal or the like. Reference numeral 12 denotes an echo canceller for canceling an echo generate on the part of the exchange; 13 denotes an encoding part for encoding the transmission signal input from the exchange side; and 14 denotes a signaling-transmission encoding circuit for encoding a signal that is transmitted during signaling. The encoding part 13 has a speech-transmission encoding circuit 4, a VBD-transmission encoding circuit 5, a facsimile signal demodulating circuit 6, and an encoding circuit 14 for signaling transmission use. Reference numeral 15 denotes a decoding part for decoding signals sent from another multiplex transmission equipment; and 16 denotes a signaling-transmission decoding circuit 8 for decoding encoded signaling signals. The decoding part 15 has a speech-transmission decoding circuit 7, a VBD-transmission decoding circuit 8, a facsimile signal modulating circuit 9, and a signaling transmission decoding circuit 16. Reference numeral 17 denotes a signal detecting/identifying part that detects and identifies such transmission signals as a speech signal, a voice band data signal and a facsimile signal. In the signal detecting/identifying part 17, reference numeral 18 denotes a signal detecting circuit for detecting whether the speech signal, the voice band data signal and the facsimile signal are voiced or unvoiced; 19 denotes a signal identifying circuit for deciding whether the signal to be transmitted is a speech signal, voice band data signal or facsimile signal; and 20 denotes a tone signal detecting circuit for detecting a particular tone signal that is transmitted by each of various signaling systems. Reference numeral 21 denotes a multiplexing part for multiplexing the transmission signal and for demultiplexing a multiplexed signal transmitted from another multiplex transmission equipment. In the multiplexing part 21, reference numeral 22 denotes a signal multiplexing circuit for multiplexing an encoded speech signal, an encoded voice band data signal, a demodulated facsimile signal and an encoded signaling signal; 23 denotes a signal demultiplexing circuit for demultiplexing the multiplexed transmitted signal into an encoded speech signal, an encoded voice band data signal, a demodulated facsimile signal and an encoded signaling signal; and 24 denotes a signaling code detecting circuit for detecting a signaling code of each signaling systems. In Fig. 1, the parts identified by the same reference numerals as those in Fig. 10 are parts identical with or corresponding to those in Fig. 10.

Next, a description will be given of the signal transmission by the multiplex transmission equipment according to Embodiment 1. No description will be given of the transmission of the speech signal, the voice band data signal and the facsimile signal since it is the same as the signal transmission in the conventional multiplex transmission equipment of Fig. 10. In this embodiment, however, the multiplexing part 21 is provided with the signal multiplexing circuit 22 and the signal demultiplexing circuit 23. The signal multiplexing circuit 22 multiplexes the transmission signal and sends it to the called multiplex transmission equipment, and the signal demultiplexing circuit 23 demultiplexes the transmission signal from the called multiplex transmission equipment into a speech signal, a voice band data signal and a facsimile signal; hence the multiplexing part corresponding to the multiplexing part 11 in Fig. 10. And, the signal detecting circuit 18 and the signal identifying circuit 19 in the signal detecting/identifying part 17 correspond to the signal detecting/identifying part 10 in Fig. 10.

In various signaling systems, signals fall into two categories, i.e. Line signaling and Register Signaling. As referred to previously, the line signaling shown in Fig. 12 includes, for example, a seizure signal for calling that is sent from a calling party exchange to a called party exchange, a proceed-to-send signal that is sent from the called party exchange in answer to the seizure signal, or a call signal that is sent from the calling party exchange to the called party exchange after sending a dial number, and an answer signal that is sent from the called party exchange in answer to the call signal. And, the register signaling includes, for example, a signal that carries a called party telephone number that is sent from the calling party exchange to the called party exchange.

Next, a description will be given of the signal transmission in the various transmission systems described previously with reference to Figs. 12 and 13.

The signal transmission will be described in connection with the case where the line-signaling signal is transmitted using abcd bits of the time slot 16 as in the Chinese No. 1 signaling system. The signaling code detecting circuit 24 monitors the time slot 16 of the transmission signal and, upon detecting a particular change in its abcd bits, outputs the result of detection to the signal detecting/identifying part 17. That is, the signaling code detecting circuit 24 monitors a particular time slot of the transmission signal and detects the arrival of the signaling signal by a change in its code. When the result of detection input thereto is indicative of a particular change, the signal detecting/identifying part 17 commands the echo canceller 12 to stop its echo canceling operation. The signal detecting/identifying part 17 may continue outputting this echo canceling operation stop command to the echo canceller 12 for a predetermined period of time even after the signaling signal becomes unvoiced. This predetermined period of time will be referred to as a Signaling Hang Over Time. During this signaling hang over time the signaling signal is regarded as voiced even after it becomes unvoiced. The echo canceller 12 stops its echo canceling operation while it is receiving the echo canceling operation stop command. During detection of the signaling signal the multiplexing part 21 outputs to the encoding part 13 a select signal to select the signaling-transmission encoding circuit 14. The encoding part 13 operates the signaling-transmission encoding circuit 14 to encode the input signal from the echo canceller 12, that is, the signaling signal, and outputs the encoded signaling signal to the multiplexing part 21. By the above operation, it is possible to stop the echo canceling operation to allow normal encoded transmission of the signaling signal until the signaling hang over time has elapsed after the detection of a particular change in line signaling.

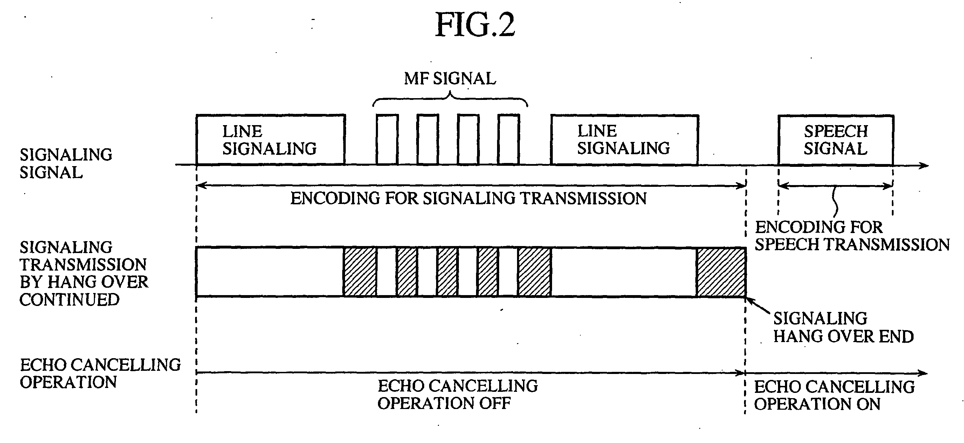

Fig. 2 is a schematic diagram explanatory of the signaling hang over time. The upper row in Fig. 2 shows a signaling signal that is input to he multiplex transmission equipment; in this case, the line-signaling signal, an MF signal, which is register signaling, and a line-signaling signal are sequentially input, followed by a speech signal or similar transmission signal. The middle row shows the continuation of signaling transmission by signaling hang over, in which case signaling signals are transmitted in blank portions. The bottom row in Fig. 2 shows the echo canceling operation by the echo canceller 12, which suspends the echo canceling operation until the lapse of the signaling hang over time and performs the echo canceling operation after the lapse of the signaling hang over time. Thus, the signaling hang over time is set at a predetermined time long enough to expire after completion of the signaling transmission.

The above has described, by way of example, the case where the line-signaling signal is transmitted using abcd bits of the time slot 16, the line-signaling using the robbed bit is also performed in the same manner as described above. Further, in the case where the line-signaling signal is transmitted as a tone signal as in the signaling system No. 5, the tone signal is detected by the tone signal detecting circuit 20 in the signal detecting/identifying part 17, and the echo canceller 12 is instructed to stop the echo canceling operation. Incidentally, the line-signaling signal is transmitted as a tone signal in the cases where the2400-Hz tone signal, or 2600-Hz tone signal, or 2400-Hz tone/2600-Hz tone mixture signal is transmitted in the signaling system No. 5, and where the CCT (2000-Hz tone) signal is transmitted in the signaling systems Nos. 6 and 7. The signal detecting/identifying part 17 indicates the detection of the signaling signal to the multiplexing part 21, and the multiplexing part 21 outputs to the encoding part 13 a select signal for selecting the signaling-transmission encoding circuit 14. Further, the signal detecting/identifying circuit 17 may also be so constructed as to instruct the echo canceller 12 to suspend the echo canceling operation until the lapse of the signaling hang over time.

### EMBODIMENT 2

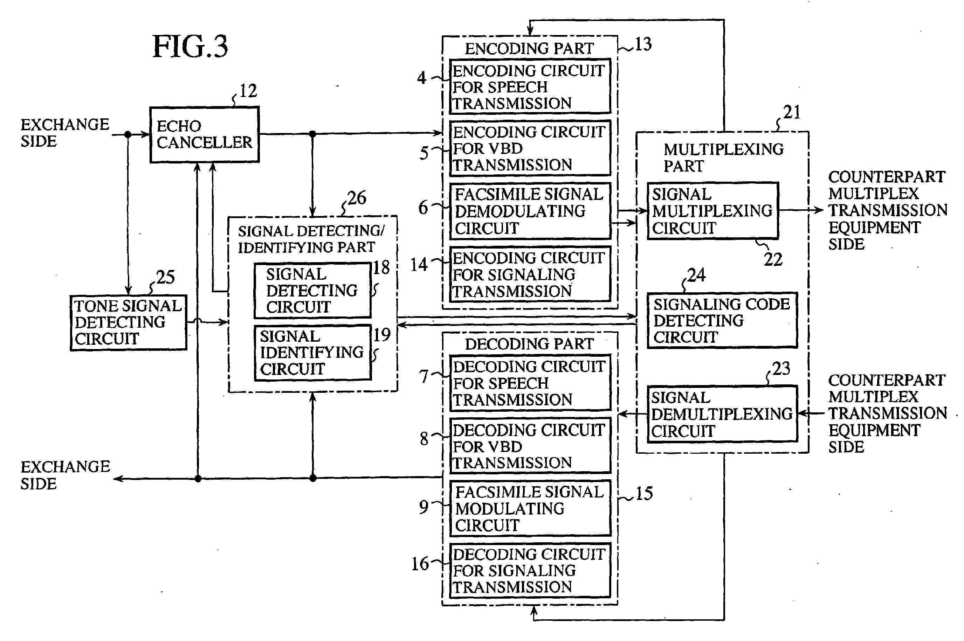

Fig. 3 is a block diagram illustrating the configuration of multiplexing equipment according to Embodiment 2 of the present invention. In Fig. 3, reference numeral 25 denotes a tone signal detecting circuit for detecting a tone signal from an input signal from the exchange side that is transmitted in various signaling transmission systems. Reference numeral 26 denotes a signal detecting/identifying part provided with a signal detecting circuit 18 and a signal identifying circuit 19, which detects and identifies a signal input thereto from an echo canceller. The signal detecting/identifying part 26 is common to the signal detecting/identifying part 17 in Embodiment 1 in configuration and function except the tone signal- detecting circuit.

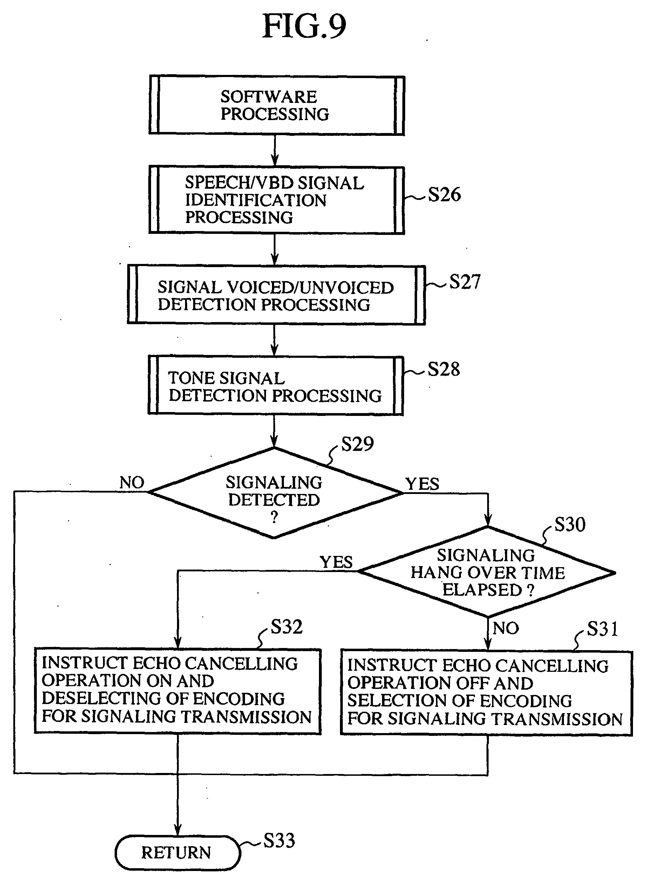

The operations for the transmission of the speech signal, the voice band data signal and the facsimile signal are the same as described previously with reference to the conventional multiplex transmission equipment of Fig. 9; hence, no description will be repeated in this respect. Further, the operation for the line-signaling transmission using the abcd bits of the time slot 16 is the same as the operation in Embodiment 1. The following description will be given of the operation for the transmission of the line-signaling signal as the tone signal as in the signaling system No. 5.

The transmission signal from the exchange side is input to the tone signal detecting circuit 25 at the stage preceding the echo canceller 12. The tone signal detecting circuit 25 detects whether the detected tone signal is a tone signal that is transmitted in the signaling system. For example, in the signaling system No. 5, it is detected whether the input signal is a 2400-Hz tone signal, 2600-Hz tone signal or 2400-Hz tone/2600-Hz tone mixture signal. In the case of the signaling system No. 7, it is detected whether the input signal is a CCT (2000-Hz tone) signal for conductivity check. On detecting the tone signal of such a signaling systems as mentioned above, the tone signal detecting circuit 25 supplies the signal detecting/identifying part 17 with a signal indicating the detection of the tone signal. On receiving the signal, the signal detecting/identifying part 17 commands the echo canceller 12 to stop the echo canceling operation and supplies the multiplexing part 21 with a signal indicating the detection of the tone signal of the signaling system. Further, if the signaling hang over time is preset, the signal detecting/identifying part 17 keeps on commanding the echo canceller 12 to stop the echo canceling operation until the lapse of that time and, at the same time, keeps on supplying the multiplexing part 21 the signal indicating the detection of the tone signal of the signaling system. During the reception of the signal the multiplexing part 21 supplies the encoding part 13 a select signal to select the signal-transmission encoding circuit 14, and on receiving the select signal, the encoding part 13 operates the signaling-transmission encoding circuit 14 to encode the input signal, and outputs the encoded signal to the multiplexing part 21.

### EMBODIMENT 3

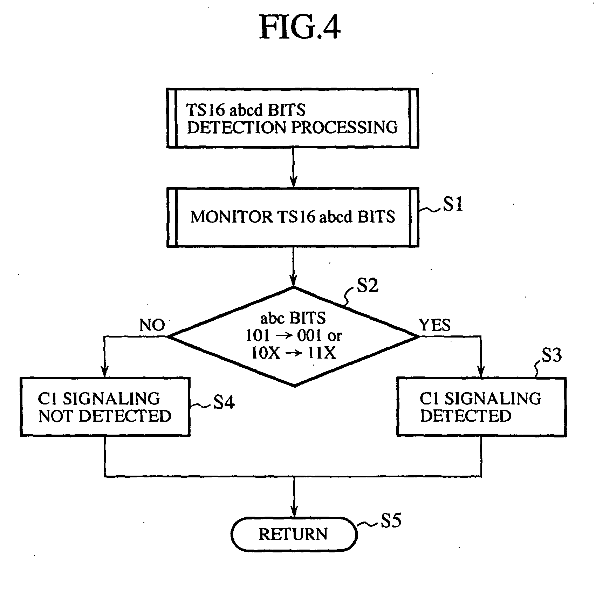

Fig. 4 is a flowchart showing the flow of signaling-detection processing in the case where signaling of the signaling system Chinese No. 1 has occurred in multiplexing equipment according to Embodiment 3 of the present invention. The detection processing of this flowchart is applied to Embodiments 1 and 2. That is, the signaling detection processing described below is performed by the signaling code detecting circuit 24 in the multiplexing part 21 depicted in Fig. 1 Embodiment 1 and the Fig. 3 Embodiment 2.

In step S1 in Fig. 4, the abcd bits of the time slot 16 are monitored and the monitored result is stored. In the next step S2 a comparison is made between the contents of the abcd bits stored in step S1 and the contents of abcd bits stored previously. In the case where the previously stored abc bits are 101 and the currently stored abc bits are 001, or where the previously stored abc bits are 10Z (where X is undefined) and the currently stored abc bits are 11X, the procedure goes to step S3, in which it is decided that the Chinese No. 1 signaling has been detected. In this step S3 the signaling code detecting circuit 24 indicates the detection of the signaling signal to the signal detecting/identifying part 17 shown in Fig. 1 in the case of Embodiment 1 and to the signal detecting/identifying part 26 shown in Fig. 3 in the case of Embodiment 2. When it is found in step S3 that the change from the previously stored abc bits to the currently stored abc bits is not the same as mentioned above, the procedure goes to step S4, in which it is decided that the Chinese No. 1 signaling has not been detected. After steps S3 and S4 the entire processing ends with step S5.

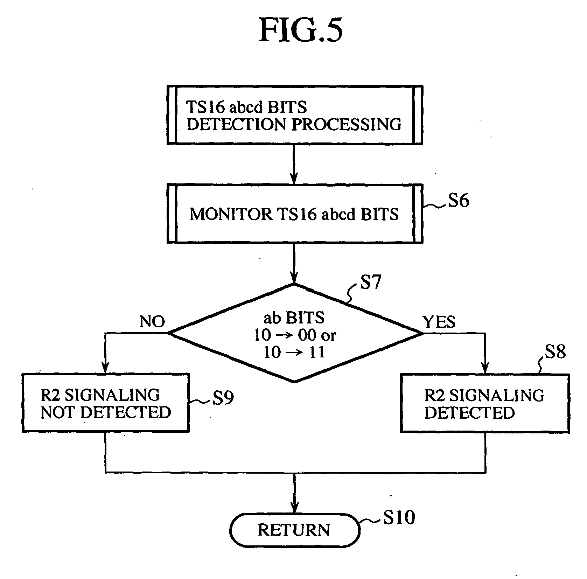

Next, a description will be given, with reference to the Fig. 5 flowchart, of the flow of signaling detection processing in the case where signaling of the signaling system R2 has occurred. The detection processing of this flowchart is applied to Embodiments 1 and 2. That is, the signaling detection processing described below is performed by the signaling code detecting circuit 24 in the multiplexing part 21 depicted in Fig. 1 Embodiment 1 and the Fig. 3 Embodiment 2.

In step S6 in Fig. 5, the abcd bits of the time slot 16 are monitored and the monitored result is stored. In the next step S7 a comparison is made between the contents of the abcd bits stored in step S6 and the contents of abcd bits stored previously. In the case where the previously stored ab bits are 10 and the currently stored abc bits are 00, or where the previously stored ab bits are 10 and the currently stored ab bits are 11, the procedure goes to step S8, in which it is decided that the signaling R2 has been detected. In this step S8 the signaling code detecting circuit 24 indicates the detection of the signaling signal to the signal detecting/identifying part 17 shown in Fig. 1 in the case of Embodiment 1 and to the signal detecting/identifying part 26 shown in Fig. 3 in the case of Embodiment 2. When it is found in step S7 that the change from the previously stored ab bits to the currently stored ab bits is not the same as mentioned above, the procedure goes to step S9, in which it is decided that the signaling R2 has not been detected. After steps S8 and S9 the entire processing ends with step S10.

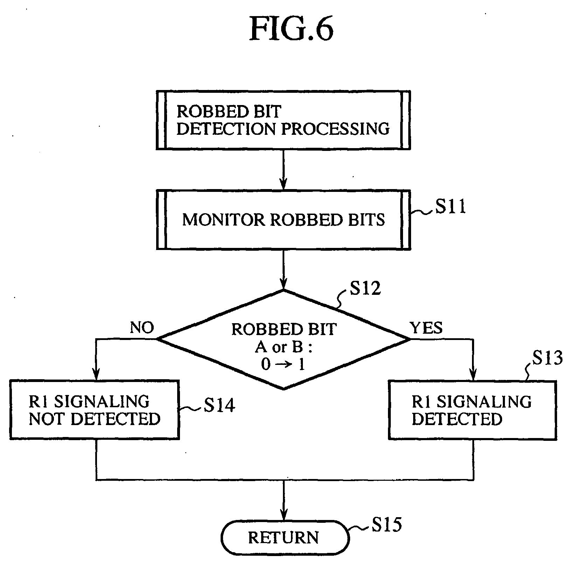

Next, a description will be given, with reference to the Fig. 6 flowchart, of the flow of signaling detection processing in the case where signaling of the signaling system R1 has occurred. The detection processing of this flowchart is applied to Embodiments 1 and 2. That is, the signaling detection processing described below is performed by the signaling code detecting circuit 24 in the multiplexing part 21 depicted in Fig. 1 Embodiment 1 and the Fig. 3 Embodiment 2.

In step S11 in Fig. 6, the least significant bit (i.e. the robbed bit) of the time slot for transmitting the speech signal, the voice band data signal and the facsimile signal is monitored and the monitored result is stored. In the next step S12 a comparison is made between the content of the robbed bit stored in step S11 and the content of the robbed bit stored previously. In the case
where the previously stored robbed bit A or B is 0 and the currently stored robbed bit A or B is 1, the procedure goes to step S13, in which it is decided that the signaling R1 has been detected. In this step S13 the signaling code detecting circuit 24 indicates the detection of the signaling signal to the signal detecting/identifying part 17 shown in Fig. 1 in the case of Embodiment 1 and to the signal detecting/identifying part 26 shown in Fig. 3 in the case of Embodiment 2. When it is found in step S12 that the change from the previously stored robbed bit to the currently stored robbed bit is not the same as mentioned above, the procedure goes to step S14, in which it is decided that the signaling R1 has not been detected. After steps S13 and S14 the entire processing ends with step S15.

### EMBODIMENT 4

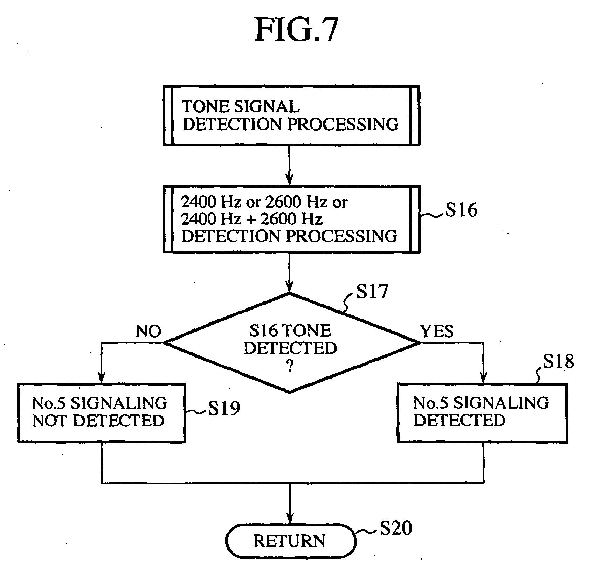

Fig. 7 is a flowchart showing the flow of signaling-detection processing in the case where signaling of the signaling system No. 5 has occurred in multiplexing equipment according to Embodiment 4 of the present invention. The detection processing of this flowchart is applied to Embodiments 1 and 2. That is, the signaling detection processing described below is performed by the tone signal detecting circuit 20 in Fig. 1 Embodiment 1 and the tone signal detecting circuit 25 in the Fig. 3

### Embodiment 2.

In step S16 in Fig. 7, the time slot for transmitting the speech signal, the voice band data signal and the facsimile signal is monitored. When it is found in the next step S17 that the 2400-Hz tone signal, or 2600-Hz tone signal, or combination 2400-Hz/2600-Hz tone signal has been detected by monitoring in step S16, the procedure goes to step S18. In the case of Embodiment 2, the tone signal detecting circuit 25 in Fig. 3 sends to the signal detecting/identifying part 26 a signal indicating the detection of the signaling signal. When the monitored result in step S16 is not the tone signal, it is decided in step S19 that the signaling No. 5 has not been detected. After steps 18 and S19 the entire processing ends with step S20.

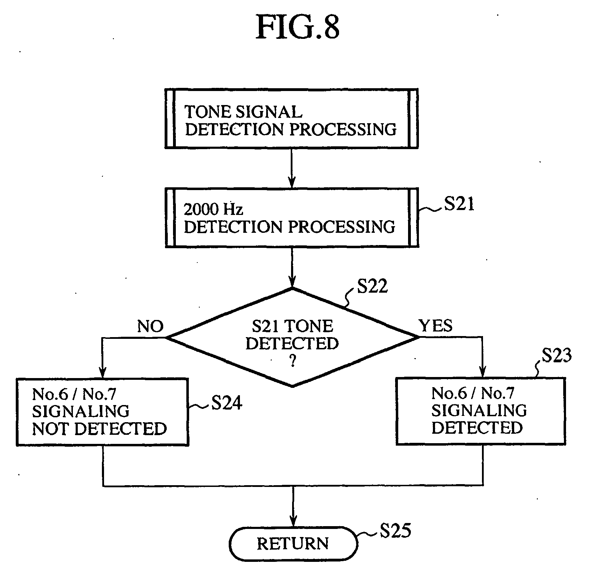

Fig. 8 is a flowchart showing the flow of signaling-detection processing in the case where signaling of the signaling system No. 7 has occurred in the multiplexing equipment according to Embodiment 4 of the present invention. The detection processing of this flowchart is applied to Embodiments 1 and 2. That is, the signaling detection processing described below is performed by the tone signal detecting circuit 20 in Fig. 1 Embodiment 1 and the tone signal detecting circuit 25 in the Fig. 3

### Embodiment 2.

In step S21 in Fig. 8, the time slot for transmitting the speech signal, the voice band data signal and the facsimile signal is monitored. When it is found in the next step S22 that the CCT (2000-Hz tone) signal for conductivity check has been detected by monitoring in step S21, the procedure goes to step S23. In the case of Embodiment 2, in step S23 the tone signal detecting circuit 25 in Fig. 3 sends to the signal detecting/identifying part 26 a signal indicating the detection of the signaling signal. When the monitored result in step S21 is not the tone signal, it is decided in step S24 that the signaling No. 5 has not been detected. After steps 23 and S24 the entire processing ends with step S25.

### EMBODIMENT 5

Fig. 9 is a flowchart showing the flow of signaling-detection processing, including speech and other signal identifying processing, by various signaling systems in multiplex transmission equipment according to Embodiment 5 of the present invention. The detection processing of this flowchart is applied to Embodiments 1 and 2.

In step S26 in Fig. 8, speech or voice band data signal identification processing is performed, and in step S27 it is detected whether the transmission signal is voiced or unvoiced. The processing in steps S6 and S27 is the same as in the conventional multiplex transmission equipment of Fig. 10; hence, no description will be repeated. The processing of step S28 is the tone signal detection processing described above in Embodiment 4. Step S29 is to decide whether the signal detected in step S28 is a signal of one of the signaling transmission systems. When it is decided in step S29 that the detected signal is the signal of any one of the signaling systems, the procedure goes to step S30. When it is found in step S30 that the signaling hang over time has not elapsed, the procedure goes to step S31, in which a command is provided to the echo canceller 12 to stop the echo canceling operation and a signaling-transmission encoding circuit selecting command is provided to the multiplexing part. When it is found in step S30 that the signaling hang over time has elapsed, the procedure goes to step S32. In step S32, a command is provided to the echo canceller 12 to stop the echo canceling operation and a command for selecting the signaling-transmission encoding circuit 14 is provided to the multiplexing part 21. On the other hand, when it is decided in step S29 that no signaling signal has been detected, the procedure goes to step S33, with which the entire processing ends.

## Claims

1. Multiplex transmission equipment comprising
an echo canceller (12) for cancelling an echo from counterpart multiplex transmission equipment, mixed in a transmission signal input from an exchange side; and **characterized by** the provision of:
an encoding part (13) for encoding a speech signal contained in said transmission signal output from the echo canceller (12) and for demodulating a facsimile signal contained in said transmission signal;
a multiplexing part (21) for multiplexing the transmission signal encoded or demodulated by the encoding part (13) and for outputting the multiplexed signal to said counterpart multiplex transmission equipment; and
a signalling code detecting circuit (24) for detecting a line signalling signal based on a change in a code of a specific time slot of the input signal from said exchange side;
wherein the echo cancellation by said echo canceller (12) is suspended when the line signalling signal is detected by said signalling code detecting circuit (24).

2. The multiplex transmission equipment as claimed in claim 1, **characterised in that** said encoding part is provided with a signalling-transmission encoding circuit for encoding the line signalling signal and that when the line signalling signal is detected by said signalling code detecting circuit, the transmission signal is encoded by said signalling-transmission encoding circuit.

3. The multiplex transmission equipment as claimed in claim 1, **characterised in that** wherein the echo cancellation by said echo canceller is suspended when the line signalling signal is detected by said signalling code detecting circuit and that the suspension of echo cancellation is continued for a predetermined period of time even after the line signalling signal becomes unvoiced.

4. Multiplex transmission equipment comprising
an echo canceller (12) for cancelling an echo from counterpart multiplex transmission equipment, mixed in a transmission signal input from an exchanges side; and **characterized by** the provision of :
an encoding part (13) for encoding a speech signal contained in said transmission signal output from the echo canceller (12) and for demodulating a facsimile signal contained in said transmission signal;
a multiplexing part (21) for multiplexing the transmission signal encoded on demodulated by the encoding part (13) and for outputting the multiplexed signal to said counterpart multiplex transmission equipment; and
a tone signal detecting circuit (20) for detecting a line signalling signal by detecting a specific tone signal in the input signal from said exchange side;
wherein the echo cancellation by said echo canceller (12) is suspended when the line signalling signal is detected by said tone signal detecting circuit (20).

5. The multiplex transmission equipment as claimed in claim 4, **characterised in that** said encoding part is provided with a signalling-transmission encoding circuit for encoding the line signalling signal and that when the line signalling signal is detected by said tone signal detecting circuit, the transmission signal is encoded by said signalling-transmission encoding circuit.

6. The multiplex transmission equipment as claimed in claim 4, **characterised in that** wherein the echo cancellation by said echo canceller is suspended when the line signalling signal is detected by said tone signal detecting circuit and that the suspension of echo cancellation is continued for a predetermined period of time even after the line signalling signal becomes unvoiced.

## Patentansprüche

1. Multiplex-Übertragungseinrichtung, die Folgendes aufweist:
einen Echokompensator (12) zum Kompensieren eines Echos von einer Multiplex-Gegenübertragungseinrichtung, das in ein von einer Vermittlungsstellenseite eingegebenes Übertragungssignal gemischt ist; und
die **gekennzeichnet ist durch** Folgendes:
einen Codierteil (13) zum Codieren eines Sprachsignals, das in dem von dem Echokompensator (12) ausgegebenen Übertragungssignal enthalten ist, und zum Demodulieren eines in dem Übertragungssignal enthaltenen Faksimilesignals;
einen Multiplexierteil (21) zum Multiplexen des von dem Codierteil (13) codierten oder demodulierten Übertragungssignals und zum Ausgeben des gemultiplexten Signals an die Multiplex-Gegenübertragungseinrichtung; und
eine Zeichengabecode-Detektierschaltung (24) zum Detektieren eines Leitungszeichengabesignals auf der Basis einer Äderung in einem Code eines speziellen Zeitschlitzes des Eingangssignals von der Vermittlungsstellenseite;
wobei die Echokompensation **durch** den Echokompensator (12) ausgesetzt wird, wenn das Leitungszeichengabesignal von der Zeichengabecode-Detektierschaltung (24) detektiert wird.

2. Multiplex-Übertragungseinrichtung nach Anspruch 1, **dadurch gekennzeichnet, dass** der Codierteil versehen ist mit einer Zeichengabeübertragungs-Codierschaltung zum Codieren des Leitungszeichengabesignals und dass dann, wenn das Leitungszeichengabesignal von der Zeichengabecode-Detektierschaltung detektiert wird, das Übertragungssignal von der Zeichengabeübertragungs-Codierschaltung codiert wird.

3. Multiplex-Übertragungseinrichtung nach Anspruch 1, **dadurch gekennzeichnet, dass** die Echokompensation durch den Echokompensator ausgesetzt wird, wenn das Leitungszeichengabesignal von der Zeichengabecode-Detektierschaltung detektiert wird, und dass das Aussetzen der Echokompensation auch dann für eine vorbestimmte Zeitdauer fortgesetzt wird, nachdem das Leitungszeichengabesignal stimmlos geworden ist.

4. Multiplex-Übertragungseinrichtung, die Folgendes aufweist:
einen Echokompensator (12) zum Kompensieren eines Echos von einer Multiplex-Gegenübertragungseinrichtung, das in ein von einer Vermittlungsstellenseite eingegebenes Übertragungssignal gemischt ist; und
die **gekennzeichnet ist durch** Folgendes:
einen Codierteil (13) zum Codieren eines Sprachsignals, das in dem von dem Echokompensator (12) ausgegebenen Übertragungssignal enthalten ist, und zum Demodulieren eines in dem Übertragungssignal enthaltenen Faksimilesignals;
einen Multiplexierteil (21) zum Multiplexen des von dem Codierteil (13) codierten oder demodulierten Übertragungssignals und zum Ausgeben des gemultiplexten Signals an die Multiplex-Gegenübertragungseinrichtung; und
eine Tonsignaldetektierschaltung (20) zum Detektieren eines Leitungszeichengabesignals **durch** Detektieren eines speziellen Tonsignals in dem Eingangssignal von der Vermittlungsstellenseite;
wobei die Echokompensation **durch** den Echokompensator (12) ausgesetzt wird, wenn das Leitungszeichengabesignal von der Tonsignaldetektierschaltung (20) detektiert wird.

5. Multiplex-Übertragungseinrichtung nach Anspruch 4, **dadurch gekennzeichnet, dass** der Codierteil versehen ist mit einer Zeichengabeübertragungs-Codierschaltung zum Codieren des Leitungszeichengabesignals und dass dann, wenn das Leitungszeichengabesignal von der Tonsignaldetektierschaltung detektiert wird, das Übertragungssignal von der Zeichengabeübertragungs-Codierschaltung codiert wird.

6. Multiplex-Übertragungseinrichtung nach Anspruch 4, **dadurch gekennzeichnet, dass** die Echokompensation durch den Echokompensator ausgesetzt wird, wenn das Leitungszeichengabesignal von der Tonsignaldetektierschaltung detektiert wird, und dass das Aussetzen der Echokompensation auch dann fortgesetzt für eine vorbestimmte Zeitdauer wird, nachdem das Leitungszeichengabesignal stimmlos geworden ist.

## Revendications

1. Equipement de transmission multiplex, comprenant :
un dispositif d'annulation d'écho (12) pour annuler un écho provenant d'un équipement de transmission multiplex de contrepartie, mélangé dans un signal de transmission entré à partir d'un côté d'échange, et **caractérisé par** la fourniture :
d'une partie de codage (13) pour coder un signal vocal contenu dans ledit signal de transmission généré par le dispositif d'annulation d'écho (12) et pour démoduler un signal de télécopie contenu dans ledit signal de transmission ;
d'une partie de multiplexage (21) pour multiplexer le signal de transmission codé ou démodulé par la partie de codage (13) et pour délivrer le signal multiplexé audit équipement de transmission multiplex de contrepartie ; et
d'un circuit de détection de code de signalisation (24) pour détecter un signal de signalisation de ligne sur la base d'un changement dans un code d'un intervalle de temps spécifique du signal d'entrée en provenance dudit côté d'échange
dans lequel l'annulation de l'écho par ledit dispositif d'annulation d'écho (12) est suspendue lorsque le signal de signalisation de ligne est détecté par ledit circuit de détection de code de signalisation (24).

2. Equipement de transmission multiplex selon la revendication 1, **caractérisé en ce que** ladite partie de codage comprend un circuit de codage de transmission de signalisation pour coder le signal de signalisation de ligne, et **en ce que** lorsque le signal de signalisation de ligne est détecté par ledit circuit de détection de code de signalisation, le signal de transmission est codé par ledit circuit de codage de transmission de signalisation.

3. Equipement de transmission multiplex selon la revendication 1, **caractérisé en ce que** l'annulation de l'écho par ledit dispositif d'annulation d'écho est suspendue lorsque le signal de signalisation de ligne est détecté par ledit circuit de détection de code de signalisation, et **en ce que** la suspension de l'annulation de l'écho se poursuit pendant une période prédéterminée même après que le signal de signalisation de ligne soit devenu muet.

4. Equipement de transmission multiplex, comprenant :
un dispositif d'annulation d'écho (12) pour annuler un écho provenant d'un équipement de transmission multiplex de contrepartie, mélangé dans un signal de transmission entré à partir d'un côté d'échange, et **caractérisé par** la fourniture:
d'une partie de codage (13) pour coder un signal vocal contenu dans ledit signal de transmission généré par le dispositif d'annulation d'écho (12) et pour démoduler un signal de télécopie contenu dans ledit signal de transmission ;
d'une partie de multiplexage (21) pour multiplexer le signal de transmission codé ou démodulé par la partie de codage (13) et pour délivrer le signal multiplexé audit équipement de transmission multiplex de contrepartie ; et
d'un circuit de détection de signal de tonalité (20) pour détecter un signal de signalisation de ligne en détectant un signal de tonalité spécifique dans le signal d'entrée en provenance dudit côté d'échange ;
dans lequel l'annulation de l'écho par ledit dispositif d'annulation d'écho (12) est suspendue lorsque le signal de signalisation de ligne est détecté par ledit circuit de détection de signal de tonalité (20).

5. Equipement de transmission multiplex selon la revendication 4, **caractérisé en ce que** ladite partie de codage est fournie avec un circuit de codage de transmission de signalisation pour coder le signal de signalisation de ligne, et **en ce que** lorsque le signal de signalisation de ligne est détecté par ledit circuit de détection de signal de tonalité, le signal de transmission est codé par ledit circuit de codage de transmission de signalisation.

6. Equipement de transmission multiplex selon la revendication 4, **caractérisé en ce que** l'annulation de l'écho par ledit dispositif d'annulation d'écho est suspendue lorsque le signal de signalisation de ligne est détecté par ledit circuit de détection de signal de tonalité, et **en ce que** la suspension de l'annulation de l'écho se poursuit pendant une période de temps prédéterminée même après que le signal de signalisation de ligne soit devenu muet.
